# EUROPEAN PATENT APPLICATION

(11) **EP 3 293 031 A1**
(43) Date of publication of application: **14.03.2018**
(21) Application number: 17190000.4
(22) Date of filing: 07.09.2017
(51) Int. Cl.: B60K 35/00, B60K 37/04, B60R 11/02, B60R 11/00

(54) **DYNAMIC DEVICE HOUSING FOR A TRANSPORTATION APPARATUS**

(30) Priority: 07.09.2016 US 201662384298 P; 05.09.2017 US 201715695262
(71) Applicant: Thunder Power New Energy Vehicle Development Company Limited, 1 Lyndhurst Terrace Central, Hong Kong (CN)
(72) Inventor: BRUSCO, Massimiliano, Central Hong Kong (CN)
(74) Representative: Sadler, Peter Frederick

(57) **Abstract**

Embodiments can provide a dynamic housing (112) system in a transportation apparatus for facilitating a user (108A) or users (108B,108) of the transportation apparatus to place portable devices of different sizes into the dynamic housing (112). The dynamic housing (112) may comprise a device detector (202) configured to detect a presence of a portable device in the housing (112), a Bluetooth connection unit configured to connect to the portable device via a Bluetooth link when the portable device is detected as being present in the dynamic housing (112) and/or any other components. In some embodiments, the dynamic housing (112) may be a sliding small drawer on a dashboard (102,112) of the transportation apparatus.

## Description

### CROSS-REFERENCE TO RELATED APPLICATION

The present application claims the benefit of and priority to U.S. Provisional Application No. 62/384,298, filed September 7, 2016, which is hereby incorporated by reference in its entirety for all purposes.

### BACKGROUND OF THE INVENTION

The invention relates to a housing system for housing a portable device of a user of a transportation apparatus.

Different portable computing devices have different types of connectors and different form factors. The current apple devices use lighting connector for connecting to a power and/or data source, and the current android devices use micro USB connector. Car manufacturers have been developing car play systems that allow users to connect their apple devices and/or android devices. Typically, these systems use Bluetooth connections to facilitate the user to connect to the systems.

### BRIEF SUMMARY OF THE INVENTION

A couple of drawbacks exist for the above-mentioned car play systems. First, these systems typically do not have a dynamic housing that can allow users to place different devices of different factors in the system. For example, users of a particular transportation apparatus may have smartphones of different sizes. Some of the smart phones may be substantially larger than the others. Second, different type of devices may have different sizes. For example, a user may wish to connect his/her tablet computer to the car play and to charge the tablet computer at the same time. However, these systems typically do not provide a dynamic housing that can allow users to place devices of different sizes. The users may be left to purchase accessories, such as a device mount for placing different devices in the transportation apparatus.

Embodiments can provide a dynamic housing system in a transportation apparatus for facilitating a user or users of the transportation apparatus to place portable devices of different sizes into the dynamic housing. The dynamic housing may comprise a device detector configured to detect a presence of a portable device in the housing, a Bluetooth connection unit configured to connect to the portable device via a Bluetooth link when the portable device is detected as being present in the dynamic housing and/or any other components. In some embodiments, the dynamic housing may be a sliding small drawer on a dashboard of the transportation apparatus. The small drawer may be slid open so a user can place his/her portable device in the small drawer and so that the portable device can be connected to in-transportation-apparatus system as mentioned above.

According to any embodiments described herein, the device detector may be a physical sensor, as opposed to means for forming a wired or wireless data connection. The device detector may be installed

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and embodiments, will become more apparent upon referring to the following specification, claims, and accompanying drawings.

### BRIEF DESCRIPTION OF THE DRAWINGS

FIG. 1 generally illustrates an embodiment of a transportation apparatus in accordance with the disclosure.
FIG. 2 illustrates one example housing system on a dashboard in the transportation apparatus shown in FIG. 1 in accordance with the disclosure.
FIG. 3 illustrates a simplified computer system that can be used implement various embodiments described and illustrated herein.

### DETAILED DESCRIPTION OF THE INVENTION

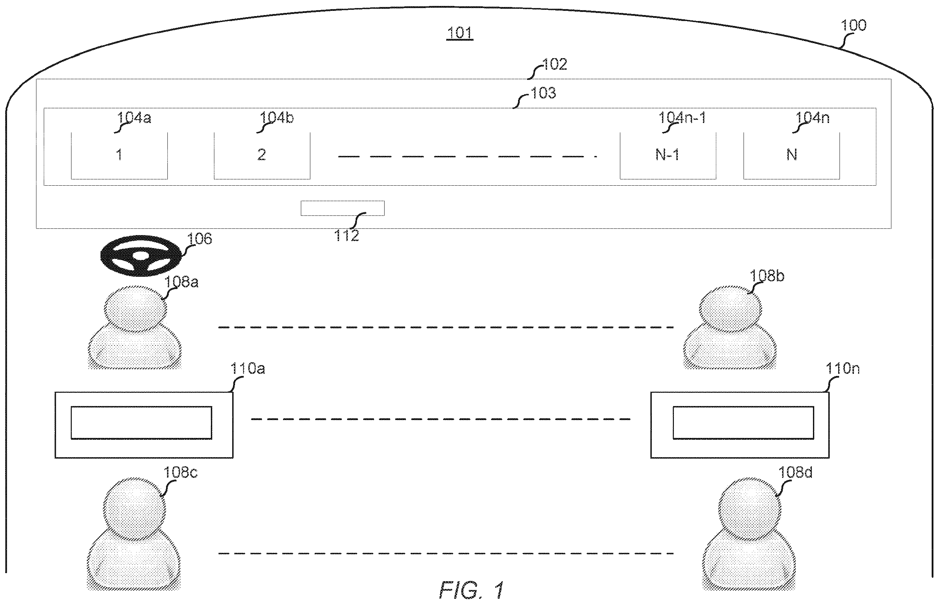

FIG. 1 generally illustrates an embodiment of a transportation apparatus 100 in accordance with the disclosure. The transportation apparatus 100 may include any apparatus that moves in distance. Examples of transportation apparatus 100 may include a vehicle such as a car, a bus, a train, a truck, a tram, or any other type of vehicle; may include a vessel such as a boat, a ship, a barge, a ferry or any other type of watercraft; may include an aircraft such as an airplane, a spaceship, or any other type of aircraft; or may include any other transportation apparatus. In one example, the transportation apparatus 100 is an electrical automobile. As shown, the transportation apparatus 100 may include a cabin 101 with a volume.

As shown in FIG. 1, in the cabin 101, there may be a dashboard 102. In implementations, the dashboard 102 may comprise multiple layers. In some implementations, the dashboard 102 may comprise a first layer made of a glass-fiber and reinforced thermoplastic material. Above the first layer, there may be a second layer made of polyurethane foam. Above the second layer, there may be a third layer made of wood and/or PVC.

In some embodiments, the dashboard 102 can comprise a screen 103. The dashboard screen 103 can occupy a portion of the dashboard 102. The dashboard screen 103 can be suitable to display one or more information panels, such as the information panels 104 shown in FIG. 1. In implementations, the dashboard screen 103 may include any display technology, such as liquid-crystal display (LCD), crystal LCD, light-emitting diode (LED), organic light-emitting diode (OLED), active-matrix organic light-emitting diode (AMOLED), Plasma, projection panel, cathode ray tube (CRT), and/or any other display technology. As also shown, the information panels 104 displayed on the dashboard screen 103 are separate and independent from each other such that the individual information panels 104 are displayed at corresponding positions on the dashboard screen 103. In this example, information panel 104a is displayed at position 1 on the dashboard screen 103, information panel 104b is displayed at position 2 on the dashboard screen 103, information panel 104n-1 is displayed at position N-1 on the dashboard screen 103, and information panel 104n is displayed at position N on the dashboard screen 103.

In some examples, information presented in the information panels 104 may include gauge information related to the transportation apparatus 100, such as current speed/altitude/direction/wind, current longitude/latitude, distance traveled, RPM, fuel level, battery level, and/or any other gauge information related to the transportation apparatus 100. In some examples, information presented in the information panels 104 may include indication information, such as seat belt, airbag, door, trunk, maintenance, safety, window lock, door lock indication information or any other indication information. In some examples, information presented in the information panels 104 may include navigational or GPS information related to navigation of the transportation apparatus 100, such as current street traveled on, map of an area the transportation apparatus 100 is traveling in, the destination information, direction instructions, traffic condition, estimated arrival time, estimated delay due to traffic, and/or any other navigation information. In some examples, information presented in the information panels 104 may include cabin information, such as current temperature, humidity, wind speed, number of passengers in one or more zones in the cabin 101 and/or any other cabin information. In some examples, information presented in the information panels 104 may include configuration information regarding the transportation apparatus 100, such as seat configuration, mirror configuration, battery configuration, driving mode configuration, and/or any other configuration. In some examples, information presented in the information panels 104 may include entertainment information. For example, such an information panel may include a video screen capable of presenting a video or still images, a browser screen capable of presenting web information, a game screen capable of presenting one or more games for user interaction, a music information screen capable of enabling a user to consume music pieces, e-commerce information screen capable of enabling a user to engage remote transaction via the Internet, radio information screen capable of presenting a list of radio stations available for user consumption, and/or any other type of infotainment screen. In some examples, information presented in the information panels 104 may include notification information such as incoming call, incoming text message, incoming video chat request, and/or any other notification information. Other examples of information panels 104 are contemplated.

As still shown in FIG. 1, the transportation apparatus 100 may comprise one or more steering wheels 106 in the cabin 101. Although only one steering wheel 106 is shown in FIG. 1, this is not intended to be limiting. In some examples, the transportation apparatus 100 may include more than one steering wheel 106. For example, it is contemplated that the transportation apparatus 100 may be an aircraft that comprises at least a main steering wheel 106 for the main pilot and at least a secondary steering wheel 106 for a co-polit.

As also shown in FIG. 1, one or more users 108 may be arranged to occupy their corresponding positions in the cabin 101. The users 108 may include one or more drivers that control the movement and/or navigation of the transportation apparatus 100, one or more passengers, and/or any other type of users 108. In this example, the user 108a is a driver that controls the driving of the transportation apparatus 100, while other users 108, e.g., users 108b-d, are passengers. As still shown, there may be multiple rows of users 108 within the cabin 101 of the transportation apparatus 100.

As shown, in a row where the passengers 108b-d are located in the cabin 101, multiple passenger displays, such as displays 110a and 110n, may be provided for the passengers. In some embodiments, as shown in this example, each passenger in the row may be provided a passenger display mounted on a back panel of a seat in front of the passenger. In this example, the passenger display 110a is provided to passenger 108c, and the display 110n is provided to the passenger 108d. A given passenger display 110 provided in the cabin 101 may include a LCD screen similar to the one fitted on the dashboard as described above. As described herein, the given passenger display 110 may be connected to a user portable device associated with a passenger. For example, the passenger display 110a may be connected to a portable device associated with passenger 108c, and the passenger display 110n may be connected to a portable device associated with passenger 108d.

As shown, the dashboard 102 may comprise a housing 112 to facilitate a user of transportation apparatus 100 to place his/her portable device in the housing 112. The portable device that can be placed in the housing 112 may include a smartphone, a tablet computer, a portable digital camera, a laptop computer, and/or any other portable device. The device size may be defined in relation to the largest dimension of the device. For devices featuring a screen, such as a tablet or mobile phone, the device size may be defined along a diagonal of the front or rear face of the device. In implementations, the housing 112 may be a slidable drawer that can be slid open from a surface of the dashboard 112. Although not shown in this figure, it is contemplated that the housing 112 may also be placed on a backseat facing a passenger of transportation apparatus. One skilled in the art will understand the following description of the housing 112 can also apply to such a housing placed at the backseat.

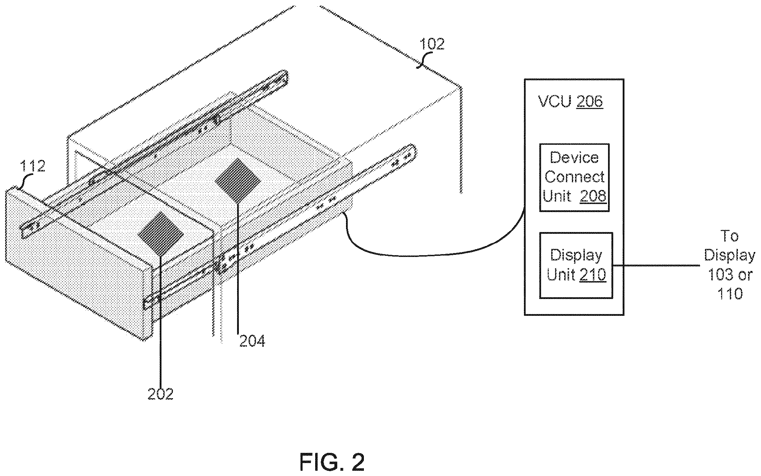

FIG. 2 illustrates one example housing 112 in accordance with the disclosure. As show, the housing 112 in this example is a slidable drawer embedded in the dashboard 102 (or a backseat of transportation apparatus). The size of the housing 112 is not limited herein, although optionally the housing may be just big enough to receive a device, with an additional margin of, for example, between 1cm and 5cm, to allow a user to easily remove it. In implementations, the size of the housing can be large enough to house a 13 inch device. As shown, the housing 112 may comprise a device detector 202, a wireless charging module 204, and/or any other components. The device detector 202 can be configured to detect a presence of a device placed in the housing. In some implementations, the device detector 202 may be a weight sensor such that it can detect a weight is placed inside the housing 112. In those implementations, upon detecting the weight, the device detector 202 can generate a signal indicating the device is being present in the housing 112. The device detector may then transmit the signal to a vehicle control unit (VCU) operatively connected to the housing 112. As an optional feature, a weight sensor may be installed within the bottom surface of the housing such that it is configured to detect a pressure applied vertically above the sensor; the weight sensor may then optionally be placed towards the front or towards the rear of the housing, and optionally towards a corner of the housing, such that devices such as mobile phones or tablets having a protruding camera lens or other protruding component are still detectable by the sensor in the event that the protruding camera lens raises a portion of the device off the bottom surface of the housing.

As also shown, the housing 112 may include a wireless charging module 204. The wireless charging module may be configured to charge the portable device placed into the housing 112. In implementations, the portable device may be preconfigured such that it will be placed into a charging mode when it is placed in the housing 112. Wireless charging is known in the art and will not be explained here.

The VCU 206 may comprise a device connect unit 208, a display unit 210, and/or any other components. The device connect unit 208 can be configured to receive the signal from the housing 112 indicating the portable device is present in the housing 112. After receiving this signal, the device connect unit 208 can then connect the portable device via a wireless link, such as Bluetooth. The display unit 210 can be configured to facilitate displaying content of the portable device on the display 103 or 110 after the portable device is connected to the VCU 206 by the device connect unit 208. In some embodiments, the display unit 210 can stream the content of the portable device to the display 103 or 110. For example, the display unit 210 may mirror the port device onto the display 103 or 110. However, this is not necessarily the only case. In some embodiments, the display unit 210 may facilitate streaming content of the portable device to the display 103 or 110 such that the content can be displayed thereon in the information panels 104.

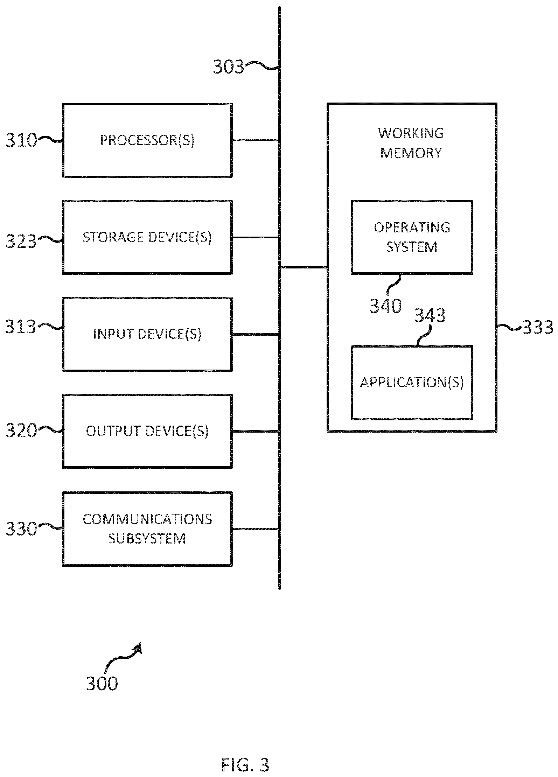

FIG. 3 illustrates a simplified computer system that can be used implement various embodiments described and illustrated herein. A computer system 300 as illustrated in FIG. 3 may be incorporated into devices such as a portable electronic device, mobile phone, or other device as described herein. FIG. 3 provides a schematic illustration of one embodiment of a computer system 300 that can perform some or all of the steps of the methods provided by various embodiments. It should be noted that FIG. 3 is meant only to provide a generalized illustration of various components, any or all of which may be utilized as appropriate. FIG. 3, therefore, broadly illustrates how individual system elements may be implemented in a relatively separated or relatively more integrated manner.

The computer system 300 is shown comprising hardware elements that can be electrically coupled via a bus 303, or may otherwise be in communication, as appropriate. The hardware elements may include one or more processors 310, including without limitation one or more general-purpose processors and/or one or more special-purpose processors such as digital signal processing chips, graphics acceleration processors, and/or the like; one or more input devices 313, which can include without limitation a mouse, a keyboard, a camera, and/or the like; and one or more output devices 320, which can include without limitation a display device, a printer, and/or the like.

The computer system 300 may further include and/or be in communication with one or more non-transitory storage devices 323, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable, and/or the like. Such storage devices may be configured to implement any appropriate data stores, including without limitation, various file systems, database structures, and/or the like.

The computer system 300 might also include a communications subsystem 330, which can include without limitation a modem, a network card (wireless or wired), an infrared communication device, a wireless communication device, and/or a chipset such as a Bluetoothä device, an 302.11 device, a WiFi device, a WiMax device, cellular communication facilities, etc., and/or the like. The communications subsystem 330 may include one or more input and/or output communication interfaces to permit data to be exchanged with a network such as the network described below to name one example, other computer systems, television, and/or any other devices described herein. Depending on the desired functionality and/or other implementation concerns, a portable electronic device or similar device may communicate image and/or other information via the communications subsystem 330. In other embodiments, a portable electronic device, e.g. the first electronic device, may be incorporated into the computer system 300, e.g., an electronic device as an input device 313. In some embodiments, the computer system 300 will further comprise a working memory 333, which can include a RAM or ROM device, as described above.

The computer system 300 also can include software elements, shown as being currently located within the working memory 333, including an operating system 340, device drivers, executable libraries, and/or other code, such as one or more application programs 343, which may comprise computer programs provided by various embodiments, and/or may be designed to implement methods, and/or configure systems, provided by other embodiments, as described herein. Merely by way of example, one or more procedures described with respect to the methods discussed above, such as those described in relation to FIG. 3, might be implemented as code and/or instructions executable by a computer and/or a processor within a computer; in an aspect, then, such code and/or instructions can be used to configure and/or adapt a general purpose computer or other device to perform one or more operations in accordance with the described methods.

A set of these instructions and/or code may be stored on a non-transitory computer-readable storage medium, such as the storage device(s) 323 described above. In some cases, the storage medium might be incorporated within a computer system, such as computer system 300. In other embodiments, the storage medium might be separate from a computer system e.g., a removable medium, such as a compact disc, and/or provided in an installation package, such that the storage medium can be used to program, configure, and/or adapt a general purpose computer with the instructions/code stored thereon. These instructions might take the form of executable code, which is executable by the computer system 300 and/or might take the form of source and/or installable code, which, upon compilation and/or installation on the computer system 300 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware, software including portable software, such as applets, etc., or both. Further, connection to other computing devices such as network input/output devices may be employed.

As mentioned above, in one aspect, some embodiments may employ a computer system such as the computer system 300 to perform methods in accordance with various embodiments of the technology. According to a set of embodiments, some or all of the procedures of such methods are performed by the computer system 300 in response to processor 310 executing one or more sequences of one or more instructions, which might be incorporated into the operating system 340 and/or other code, such as an application program 343, contained in the working memory 333. Such instructions may be read into the working memory 333 from another computer-readable medium, such as one or more of the storage device(s) 323. Merely by way of example, execution of the sequences of instructions contained in the working memory 333 might cause the processor(s) 310 to perform one or more procedures of the methods described herein. Additionally or alternatively, portions of the methods described herein may be executed through specialized hardware.

The terms "machine-readable medium" and "computer-readable medium," as used herein, refer to any medium that participates in providing data that causes a machine to operate in a specific fashion. In an embodiment implemented using the computer system 300, various computer-readable media might be involved in providing instructions/code to processor(s) 310 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 323. Volatile media include, without limitation, dynamic memory, such as the working memory 333.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 310 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 300.

The communications subsystem 330 and/or components thereof generally will receive signals, and the bus 303 then might carry the signals and/or the data, instructions, etc. carried by the signals to the working memory 333, from which the processor(s) 310 retrieves and executes the instructions. The instructions received by the working memory 333 may optionally be stored on a non-transitory storage device 323 either before or after execution by the processor(s) 310.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A housing system for housing a portable device, the housing system being located within a dashboard of a transportation apparatus, the housing system comprising:
a housing configured to house the portable device;
a device detection component arranged under or within a bottom surface of the housing, wherein the device detection component is configured to:
detect a presence of the portable device in the housing;
generate a signal indicating the presence of the portable device in the housing; and
transmit the signal to a vehicle control unit (VCU) of the transportation apparatus; and, wherein the VCU is configured to:
in response to receiving the signal, connecting the portable device via a wireless link; and
facilitating a display of a content of the portable device on a display of the transportation apparatus.

2. The housing system of claim 1, wherein the housing is a drawer on the dashboard.

3. The housing system of claim 1 or 2, wherein the device detection component is a weight sensitive device configured to detect the presence of the portable device in the housing by detecting a weight of the portable device.

4. The housing system of claim 3 wherein the weight sensor is placed towards the front or towards the rear of the housing.

5. The housing system of claim 4 wherein the weight sensor is placed towards a corner of the housing.

6. The housing system of any preceding claim, wherein the housing system further comprises a wireless charging module configured to charge the portable device when the portable device is inside the housing.

7. The housing system of any preceding claim, wherein the wireless link is Bluetooth.

8. The housing system of any preceding claim, wherein facilitating the display of the content of the portable device on the display of the transportation apparatus comprises mirroring the portable device onto the display.

9. The housing system of any preceding claim, wherein the portable device is a smartphone, a tablet computer, or a laptop computer.

10. The housing system of any preceding claim, wherein the transportation apparatus includes a car, a bus, a train, a truck, or a tram.
